# EUROPEAN PATENT SPECIFICATION

(11) **EP 2 879 397 B1**
(45) Date of publication and mention of the grant of the patent: **15.03.2017**
(21) Application number: 14173465.7
(22) Date of filing: 23.06.2014
(51) Int. Cl.: H04N 21/458

(54) **Method and device for processing a media content stream**
Verfahren und Vorrichtung zur Verarbeitung eines Streams von Medieninhalten
Procédé et dispositif pour le traitement d'un flux de contenu de diffusion

(30) Priority: 29.11.2013 EP 13194982
(43) Date of publication of application: 03.06.2015
(73) Proprietor: NXP B.V., 5656 AG Eindhoven (NL)
(72) Inventor: Suwald, Thomas, 5656 AG Eindhoven (NL); Paul, Arup Jyoti, 5656 AG Eindhoven (NL)
(74) Representative: Krott, Michel

(56) References cited:
- US-A1- 2003 033 157
- US-A1- 2006 168 616
- US-A1- 2009 187 593
- US-A1- 2009 260 030

## Description

### FIELD

The present disclosure relates to a method for processing a media content stream. Furthermore, the present disclosure relates to a corresponding computer program product. Furthermore, the present disclosure relates to a corresponding device for processing a media content stream.

### BACKGROUND

Today, most media content streams comprise commercial advertisements. For example, such advertisements may be embedded in media content streams provided through TV channels or radio channels. Typically, the basic media content (primary media content) and the advertisement content (secondary media content) are compiled by a single content provider and transmitted through a suitable communication channel, such as a TV channel, radio channel or an internet connection. After receipt of the compiled stream by a suitable receiver, the stream may be output to the user as a user output content stream. For example, the compiled stream may comprise a movie as primary media content interleaved with advertisement videos as secondary media content, in which case the compiled stream will be output to the user by means of moving images and sound.

Usually, the type of advertisement content which is embedded into such streams is based on average consumer behavior. For example, the content provider may use statistics in order to determine which advertisement messages should be included into the media content streams. However, in many cases the advertisement content is not well suited for non-average end-users. As a consequence, the advertisements are relatively ineffective. For example, TV content is normally broadcasted at a very large scale. As a result, local differences in user requirements cannot be given proper attention when selecting advertisement content. Due to the broad audience that can be reached by media such as TV the time slots available for advertisements are very expensive. Hence, the broadcasting of advertisements on national TV, for example, is often a prerogative of large and relatively wealthy commercial parties. In other words, small parties or local vendors will hardly get a chance to broadcast advertisements on national TV or radio. Therefore, the potential of the media channels may not be fully utilized. In view thereof, there may exist a need to improve the processing of such media content streams.

### SUMMARY

There is disclosed a method for processing a media content stream which comprises primary media content and secondary media content, the method comprising: replacing the secondary media content with replacement content in dependence on a user profile; combining the primary media content and the replacement content into a user output content stream.

According to an illustrative embodiment, the user profile comprises user preferences.

According to a further illustrative embodiment, the user profile is derived at least in part from a user feedback on the user output content stream.

According to a further illustrative embodiment, the user profile is managed by a centralized identity management system.

According to a further illustrative embodiment, the user profile is derived at least in part from data stored in a user-owned secure identity container.

According to a further illustrative embodiment, said data comprises at least one of a shopping pattern, a location and movement pattern, a spending pattern, a reaction on a bonus program, and a commuter pattern.

According to a further illustrative embodiment, the replacement content is received from a replacement content provider.

According to a further illustrative embodiment, combining the primary media content and the replacement content is performed using time data received from a time server.

According to a further illustrative embodiment, the secondary media content is received through a communication channel which is different from a communication channel through which the first media payload is received.

According to a further illustrative embodiment, combining the primary media content and the replacement content is performed by multiplexing said primary media content and replacement content.

According to a further illustrative embodiment, said multiplexing is performed under control of multiplex control data received from a replacement content provider.

According to a further illustrative embodiment, the primary media content comprises at least one of a video content, a radio content, a gaming content and an internet content.

According to a further illustrative embodiment, the secondary media content comprises advertisement content and the replacement content comprises alternative advertisement content.

Furthermore, there is disclosed a computer program product comprising instructions which, when being executed by a processing unit, carry out or control steps of a method of the kind set forth.

Furthermore, there is disclosed a device, in particular a media content receiver, for processing a media content stream which comprises primary media content and secondary media content, the device being arranged to process the media content stream by: replacing the secondary media content with replacement content in dependence on a user profile; combining the primary media content and the replacement content into a user output content stream.

### DESCRIPTION OF DRAWINGS

Embodiments will be described in more detail with reference to the appended drawings, in which:
Fig. 1 shows an example of a use case in which the presently disclosed method may be applied;
Fig. 2 shows a further example of a use case in which the presently disclosed method may be applied;
Fig. 3 shows an illustrative embodiment of a system in which the presently disclosed method may be applied;
Fig. 4 and Fig. 5 show an illustrative embodiment of a replacement method;
Fig. 6 shows an illustrative embodiment of a method of generating multiplex control data;
Fig. 7 shows an illustrative embodiment of a further system in which the presently disclosed method may be applied;
Fig. 8 shows an illustrative embodiment of a media content receiver system by means of which the presently disclosed method may be implemented;
Fig. 9 shows an illustrative embodiment of a media content receiver;
Fig. 10 shows an illustrative embodiment of a system that may facilitate generating a user profile;
Fig. 11 shows an illustrative embodiment of a further system that may facilitate generating a user profile;
Fig. 12 shows an example of steps which facilitate making a commercial offer to a user;
Fig. 13 shows an example of a further use case in which the presently disclosed method may be applied.

### DESCRIPTION OF EMBODIMENTS

In accordance with the present disclosure, a received media content stream is processed by distinguishing, within said received media content stream, between primary media content and secondary media content, adjusting the secondary media content to preferences of a user, and combining the primary media content and the secondary media content into a user output content stream. Thus, the original link between the basic media content (primary media content) and the advertisement content (secondary media content) may be logically broken up. More specifically, the basic media content and the advertisement content may be broken up at the user's site. Then, the isolated basic media content may be combined with newly arranged advertisement content, and the resulting stream may be provided as a new output stream to the end-user.

The newly arranged advertisement content may for example comprise replacement content provided by a third party, i.e. a replacement content provider. The replacement of the original advertisement content may be made dependent on a dynamic user profile, i.e. a profile which specifies the preferences of the user over time. Since these preferences may change, the user profile may be dynamic in nature. Furthermore, the dynamic user profile may be managed by a centralized identity management system, which may provide a relatively efficient way to manage said profile. For example, the user's viewing behavior, his age, his location and other differentiating attributes may be used for the creation of a dynamic user profile which may represent the user's identity.

Furthermore, electronic tokens, such as user-owned smart cards and mobile devices, may be used to collect and provide additional profile-relevant user information to the centralized identity management system, where the gathered information may be used to complete the user's profile. Thus, such electronic tokens may act as a transport medium for profile information in situations where access to that data is otherwise not possible. This approach may enable access to information that cannot easily be accessed through the internet, for example.

Generally speaking, generating advertisement content is an expensive process and therefore the advertisement content is in most present-day setups repeatedly broadcasted. For example, big brands have their advertisements broadcasted daily. Even when less traditional broadcasting channels are used, such as Internet Protocol television (IPTV), media content streams are typically compiled by a central service and sent, after compilation, to a user through a network connection. This broadcasting approach may consume a lot of network bandwidth, and the bandwidth requirements may even exceed the available bandwidth. In fact, the only media content which justifies high bandwidth consumption is the basic media content, which is relatively variable. The advertisement content, on the other hand, does not change often, but it is repeatedly broadcasted. In contrast, in accordance with the present disclosure, the advertisement content may be transmitted to the user only when it has changed, for example. Then, the advertisement content may be stored in the user's media content receiver, for example, where it can be combined with received basic media content. Furthermore, the advertisement content may be transmitted to the user through a communication channel which is different from the communication channel through which the basic media content is transmitted. For example, instead of transmitting the advertisement content together with the basic media content over-the-air (OTA), the advertisement may be transmitted through an internet connection or network connection having a relatively low utilization.

In order to facilitate combining the basic media content and the advertisement content and, more specifically, in order to enable a substantially precise start of locally stored media content at a defined moment in time, a media content receiver of the kind set forth may have access to a time server. For example, it may be sufficient to send an identifier linked to a specific advertisement stream together with the scheduled broadcast time to the user. Based on such information the user's receiver may recompile the media content, i.e. combine the basic media content with the advertisement content, without visible loss of quality. Instead of maintaining the original sequence of advertisement messages, the sequence may also be rearranged in accordance with the user's profile. Furthermore, replacement content may be provided to the user, for example content that better suits his or her user profile. By doing so, personalized advertisement content may be provided to the user, i.e. advertisement content which matches his or her identity as expressed by his or her user profile. In this way, the effectiveness of the advertising content may be increased.

Furthermore, the replacement content may be personalized in accordance with user attributes, such as the user's location, behavior or habits. This will also enable small and local vendors to provide advertisement content at prime time media broadcasts. In order to perform such a personalization in a relatively efficient manner, users with similar identity attributes may be combined into a user group to which a dedicated stream may be provided. Furthermore, the advertisement content need not be sent in real-time, because the provision of the advertisement content may be based on a predefined schedule. This approach may enable that many vendors may transmit their personalized advertisement content to a target group at the same time without any interference between different target groups, which may result in a better utilization of the available broadcasting timeslots.

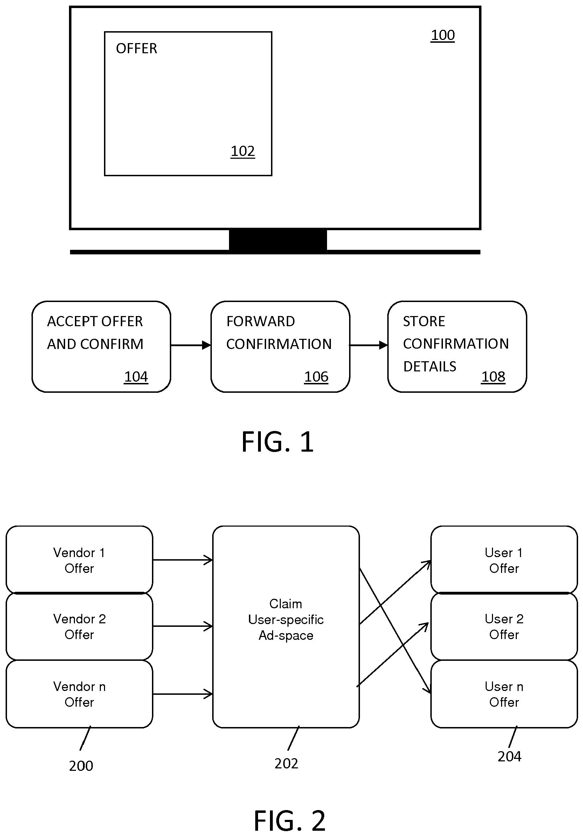

**Fig. 1** shows an example of a use case in which the presently disclosed method may be applied. In this example, a local restaurant has seats available and wants to contact only local customers. In order to reach these local customers, the restaurant may provide, for example via a replacement content provider, replacement content comprising a personalized offer 102 which may be displayed on a television set 100 during time slots reserved for regular advertisement content, for example. The television set 100 may comprise a media content receiver (not shown) which is arranged to adjust the advertisement content, i.e. to carry out the replacement of the original advertisement content by the replacement content, and to combine the basic media content (for example a movie) with the replacement content in an output content stream which is displayed. This media content receiver may also take the form of, or be embedded in, a media box (not shown) connected to the television set 100. In this way, the restaurant may advertise more effectively. The user may accept the offer and confirm it 104 by, for example, bringing an electronic token, such as a contactless smart card or a secure data storage within a mobile device, into close proximity to the media box, such that the electronic token interacts with the media box. Then, the confirmation may be forwarded 106 to the restaurant and subsequently the restaurant may send a confirmation message to the user. The confirmation details, including for example reservation details, may be stored 108 in the electronic token and/or in a local profile storage unit.

**Fig. 2** shows a further example of a use case in which the presently disclosed method may be applied. In this example, a plurality of vendors 200 intends to place an advertisement on a prime time broadcast stream. They intend to provide advertisement to a group of people being located around a target city and being of the age of 40 to 50 years. Their advertisement content may now be packed specifically for the group of end-users matching this pattern. Commercial advertisement content is usually carefully prepared and it will not be updated frequently. This enables saving of transmission bandwidth by transmitting the required content well before it is to be displayed. It does not need to be sent at prime time, i.e. it may be transmitted when the network utilization is relatively low, resulting in a better overall network utilization. Each vendor may claim 202 a user-specific advertisement space and send personalized advertisement content, e.g. commercial offers, to each one of a plurality of users 204.

The end user, and more specifically his or her media content receiver, may be connected through a network connection to a centralized identity management system that is primarily used to capture his user preferences and create and/or maintain a corresponding user profile, which may be dynamic or variable in nature. The centralized identity management system may be accessed by the replacement provider in order to determine which replacement content would be appropriate for a specific user. It is noted that the terms "alternative content" and "substitute content" as used in the drawings have the same meaning as the term "replacement content".

The provided replacement content may also comprise special vendor offers to a user. If the user accepts such an offer he may confirm it by connecting an electronic token through a network connection and through the centralized identity management system to the vendor, for example. The connection of the electronic token may cause an automatic transmission of an acceptance message to the replacement provider, for example, who may act on behalf of the vendor. The vendor may respond by sending back a confirmation code to the user, as shown in Fig. 1. The electronic token may send an acceptance message in a format which the vendor may accept. Thus, the connection to the centralized identity management system may be used to handle authentication towards the vendor and transaction confirmation by the vendor towards the user.

In addition to or instead of television streams, the presently disclosed method may equally well be applied to other stream formats, for example radio streams and internet streams. For instance, in-game advertisements in roll plays may also be supported. Furthermore, the substitution of advertisement content of web pages is feasible by applying HTTP stream filters acting as content multiplexers, for example.

As described by way of example above, secondary media content may be adjusted in dependence on user preferences. For example, the secondary media content may be replaced by replacement content that has been specifically prepared for an identity, indicative of preferences of a certain user, or a group of identities, indicative of preferences of a certain group of user. A user identity may be derived from behavioral patterns, such as TV zapping, shopping, responses to special vendor requests, and from generic identity information, such as name, address, age and gender.

Electronic tokens such as public transportation cards and loyalty cards, or comparable emulations running on smart phones, may be used to capture user behavior which is outside the reach of the internet. A centralized identity management system may determine the best suitable secondary media content for a certain user or group of users in dependence of the user profile. The centralized identity management system may act as a replacement provider that provides the secondary media content to the user, in particular by sending it to the user's media content receiver. Alternatively, a separate replacement provider may collaborate with the centralized identity management system in order to select suitable replacement content in accordance with the user profile and provide it to the user. Furthermore, the user profile may be dynamic in the sense that it may vary over time.

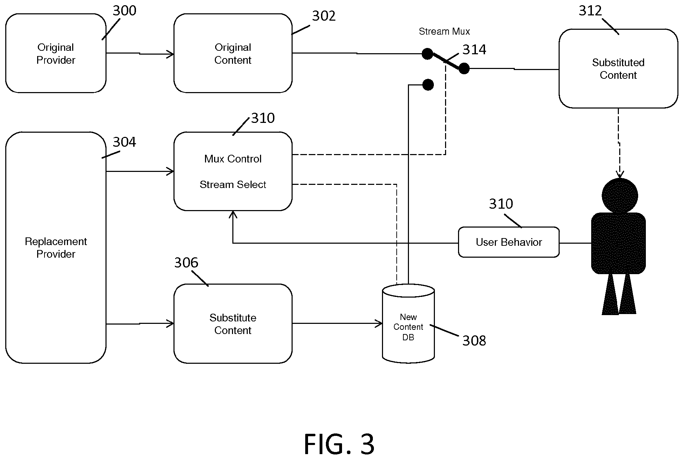

**Fig. 3** shows an illustrative embodiment of a system in which the presently disclosed method may be applied. In this example, an original stream provider 300 provides original media content 302 in the form of a stream via a broadcast network, for example via satellite or cable communication channels. A replacement content provider 304 observes the stream of the content provider and detects by appropriate means, which may be known as such, the beginning and the end of non-basic-media-content intervals that may be used for content replacement. Furthermore, the replacement content provider 304 may have information about the user's viewing and shopping behavior 310, for example. In dependence on such information additional replacement intervals may be identified. In-game advertisements of gaming applications may also be replaced by replacement content (i.e. substitute content 306) provided by the replacement content provider 304.

The replacement content 306 may be transferred in due time and stored in a local storage unit 308 at the end user's site, for example in a media content receiver (not shown). The replacement content 306 may be sent in encrypted form and be decrypted by the media content receiver at viewing time, for instance. A multiplexing signal may be generated at the user site in dependence on the interval information provided by the replacement content provider 304. The information provided by the replacement content provider 304 may comprise an identifier of the replacement content 306 as well as the scheduled broadcasting time. A stream multiplexer 314 may be controlled by this interval information. The stream multiplexer 314 may be configured to provide the replacement content 306 in an expected output format. The expected output form may be defined in terms of image resolution, aspect ratio, color format and time synchronization in case of a video stream, and in terms of sampling frequency and stereo/mono in case of an audio stream.

The stream multiplexer 314 may support a seamless multiplexing with the basic-media-content portion of the original media content without noticeable artifacts. Said multiplexing is an illustrative embodiment of combining the basic media content (comprised in the original media content 302) with the replacement content 306. The resulting output content stream 312 may be sent to the user and his or her reaction on the stream may be captured, for instance by evaluating the user's zapping behavior (switching between channels) or feedback provided through a "like"- or "dislike"-button on a user-owned remote control device (not shown). The captured user behavior may be forwarded to the centralized identity management system, which may be located at the replacement content provider's site. Alternatively or in addition, the captured user behavior may be pre-processed at the user's site.

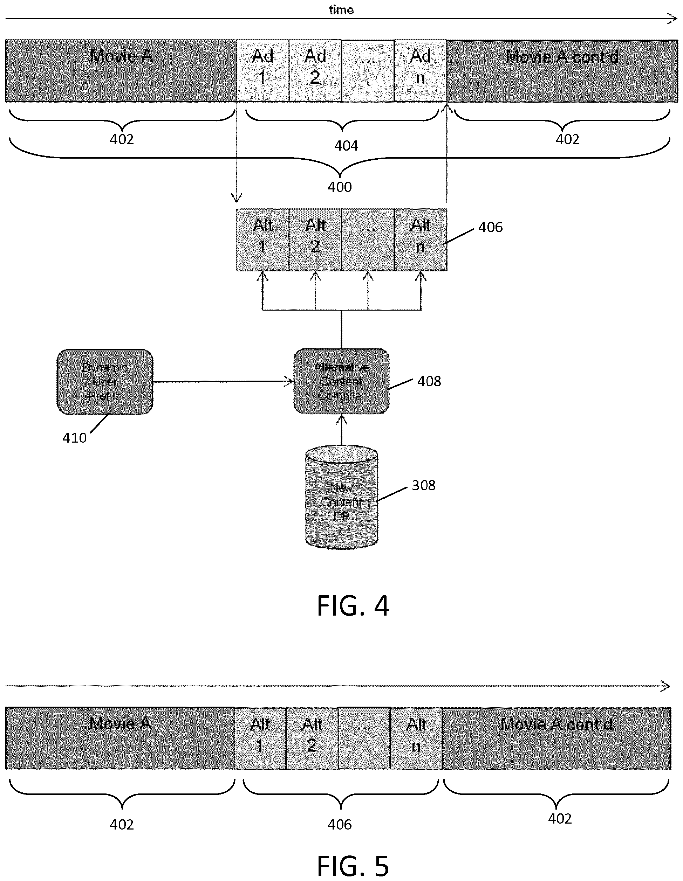

**Fig. 4** and **Fig. 5** show an illustrative embodiment of a replacement method. This replacement method may regarded as an example of an implementation of the step of combining the primary media content and the adjusted secondary media content into a user output content stream of the kind set forth. In particular, as shown in Fig. 4, a media content stream 400 comprises a portion that contains basic media content 402, for example a movie, and a portion that contains advertisement content 404. Replacement content 406 has been stored in a local storage unit 308 at the user's site. A replacement content compiler 408 may retrieve the required replacement content from the local storage unit 308 according to a recipe provided by the replacement content provider (dynamic user profile 410). As shown in Fig. 5, the output content stream provided to the user comprises the replacement content 406.

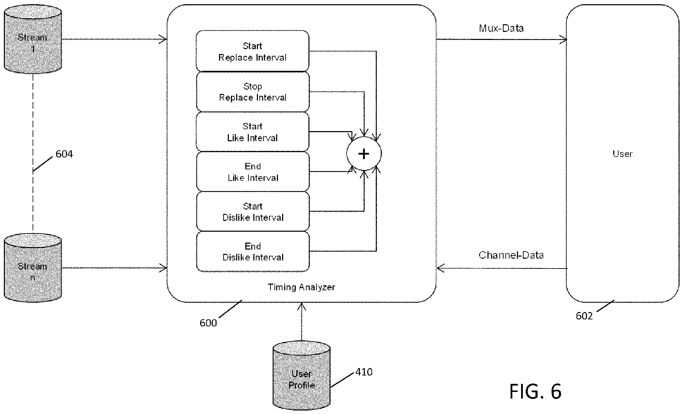

**Fig. 6** shows an illustrative embodiment of a method of generating multiplex control data. The multiplex control data may be used to control a stream multiplexer 314. The multiplex control data may be generated by a multiplexer control/stream select unit 310 as shown in Fig. 3. The user profile 410 may have been generated at the replacement content provider's site by the centralized identity management system, for example, in dependence on as many input data as feasible. Examples of such input data for creating the user profile 410 are: channel selection data provided by the user 602 (captured via remote control), "Like"- or "Dislike"-button presses during content reception provided by the user 602 (captured via remote control), broadcasting information provided by the broadcaster (e.g. program start, program end), shopping information provided by vendors (e.g. based on data captured by vendors or based on data stored on electronic tokens such as loyalty cards, payment cards, mobile phones), and requirements provided by vendors. A timing analyzer 600 may support the generation of multiplex control data for a plurality of streams 604.

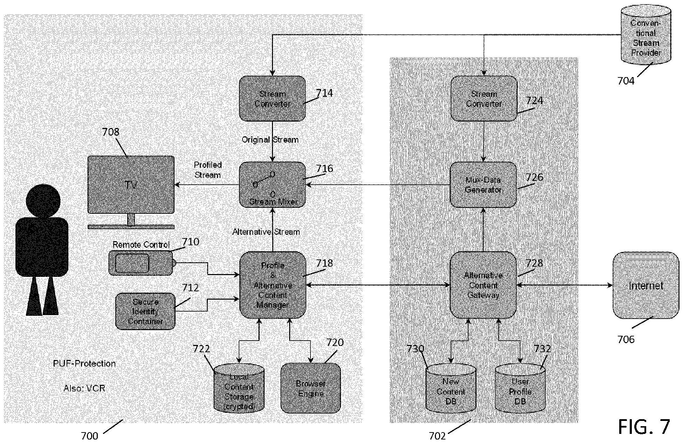

**Fig. 7** shows an illustrative embodiment of a further system in which the presently disclosed method may be applied. In this example, the system comprises a user segment 700, a content replacement provider segment 702, a stream provider 704 and a network provider 706. The user segment 700 may comprise a browser engine, which may provide internet access or data streams from the internet, for example internet TV, internet radio and RSS-feeds. The stream provider 704 may provide conventional data streams such as video broadcast streams. Conventional data streams may need to be converted both in the user segment 700 and in the replacement provider segment 702. The user segment 700 may comprise a secure identity container. This secure identity container may facilitate interfacing with external applications. That is to say, external applications may securely store user-related profile information in the secure identity container. The secure identity container may for example be a smart card, a smart phone or an electronic document protected by security measures against unauthorized reading. The information contained in the secure identity container may be forwarded via a network connection to the replacement content provider (referred to as "alternative content gateway" in this example) for user profile processing. Thus, the replacement content provider may act as a proxy between the network provider 706 and the user.

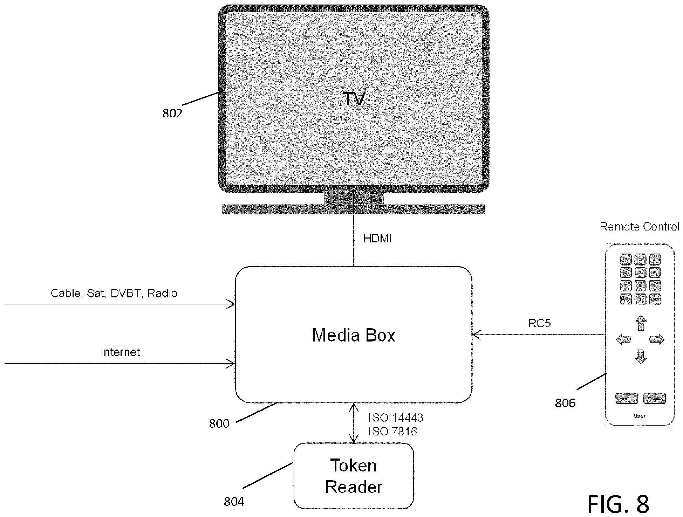

**Fig. 8** shows an illustrative embodiment of a media content receiver system by means of which the presently disclosed method may be implemented. The media content receiver may be embodied as a so-called media box 800, which may be connected to a television set 802, a token reader 804 and a remote control unit 806. It is noted that this is merely an example: the media content receiver may also be embedded in the television set 802, as well as the token reader 804, for example. The term "media content receiver" as used herein comprises this alternative as well and should be interpreted in a broad sense as a device capable of receiving media content. The media box 800 may be configured to intercept the messages sent by the remote control unit 806 to the television set 802. The television set 802 may be connected to the media box 800 through generic stream interfaces, such as HDMI and SCART-RGB. The token reader may be a contactless smart-card reader conforming to standard ISO 14443, which may also be compatible with NFC-enabled smart phones. Alternatively or in addition, the token reader may comprise a contact interface conforming to standard ISO 7816. In another configuration the token reader may comprise a wireless LAN interface. Moreover, the token reader may comprise a Bluetooth or Bluetooth low-energy interface. The media box 800 may receive media content streams via, among others, cable, satellite, Digital Video Broadcasting Terrestrial (DVBT) and radio communication. Furthermore, the media box 800 may be connected to the internet via a network connection, such as Asymmetric Digital Subscriber Line (ADSL). A software-defined radio concept may be used in order to enable media stream reception in a broad frequency range.

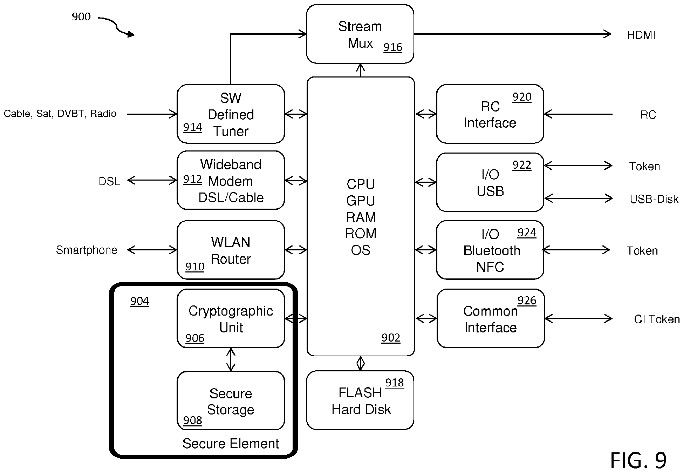

**Fig. 9** shows an illustrative embodiment of a media content receiver. In this example, the media content receiver is a media box 900 that comprises a central part 902, which in turn comprises a central processing unit (CPU) configured to run application software code under an operating system (OS), a general-purpose graphics unit (GPU) configured to provide media content in the required media formats and attached storage units such as random access memory (RAM) and read-only memory (ROM). The media box 900 furthermore comprises a stream multiplexer 916, a software-defined tuner 914 for receiving TV- and radio streams, a wide area network modem 912, a wireless LAN router 910, a secure element 904 having a cryptographic unit 906 with an attached secure storage unit 908, a mass storage interface 918 to for example hard disks or solid state disks, a common interface 926, an I/O-interface 924 as required to connect to a token, a USB interface 922 and a remote control interface 920.

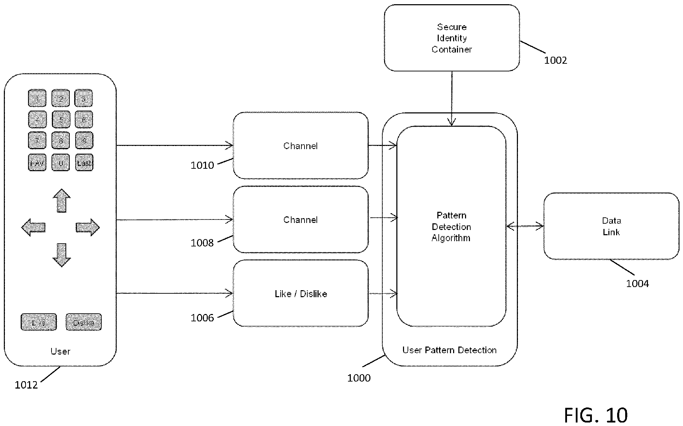

**Fig. 10** shows an illustrative embodiment of a system that may facilitate generating a user profile. The user's viewing behavior may captured by analyzing the user's switching between various channels 1008, 1010. Switching to another channel 1008, 1010 may be regarded as an implicit "dislike", and continued viewing of the same channel 1008, 1010 may be regarded as an implicit "like", so that channel switching may be indicative of the user preferences in dependence of which the secondary media content is adjusted. Alternatively or in addition, the user may provide explicit feedback using Like/Dislike buttons on his or her remote control unit 1012. In case the media box is configured to provide gaming applications the user's gaming preferences may also be captured, for instance. Information regarding channel switching and explicit like/dislike feedback may be received by a user pattern detection block 1000, which may in addition evaluate user profile information received from an electronic token or secure identity container 1002, for example a smart card or a smart phone. The information obtained in this way may comprise, among others, shopping patterns, location and movement patterns, spending patterns, reaction on bonus programs, and commuter patterns.

Profile-relevant information which is provided by the electronic token may be forwarded via the network connection (data link 1004) to the centralized identity management system (not shown) at the replacement content provider's site, where it may be utilized to update a user-specific pattern detection algorithm. For example, the pattern detection algorithm may be improved by allowing it to take additional profile-relevant information as input parameters. The pattern detection algorithm may be made available, by the replacement content provider, to the user, so that it may be installed in the media content receiver, for instance. An analysis of the switching behavior may then be executed by the pattern detection algorithm provided by the replacement content provider. The pattern detection algorithm may be implemented in software, so that it may be executed by the CPU of the media box, for example.

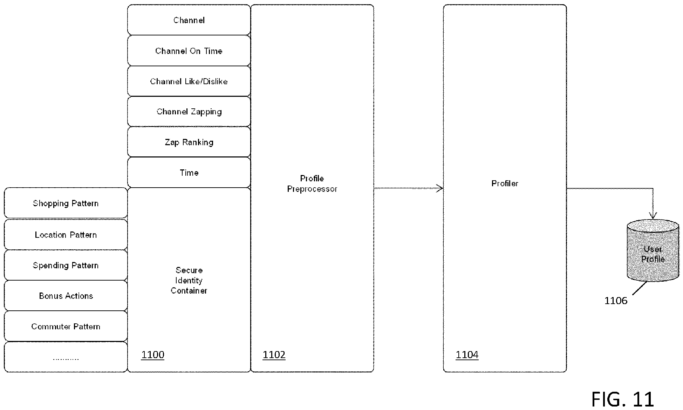

**Fig. 11** shows an illustrative embodiment of a further system that may facilitate generating a user profile. The user profile may be created and updated by the centralized identity management system at the replacement content provider's site. The information that may be utilized by the centralized identity management system for generating the user profile may comprise information provided through the end user's media box as well as information collected from an electronic token, i.e a secure identity container 1100, by the media box. The user profile may be stored in a centralized user profile database 1106 at the content replacement provider's site. The media box may also comprise a profile preprocessor 1102 which preprocesses the information before it is transmitted to a profiler unit 1104 at the content replacement provider's site, for example.

The electronic token or secure identity container 1100 may be used to carry profile-relevant information that otherwise may not be accessed by the media box. As an example, the token may be a loyalty card issued by one vendor. This vendor may have placed an advertisement targeting a special group of customers. The vendor would then like to verify the effect of the advertisement. Therefore, he writes purchase-related information to a loyalty card. In order to motivate the user to provide the stored data to the media box bonus deals are frequently offered to the user. It is assumed that many end users accept such a bonus deal. In order to confirm acceptance of a bonus deal the user may have to authenticate by connecting his loyalty card to the media box, for example.

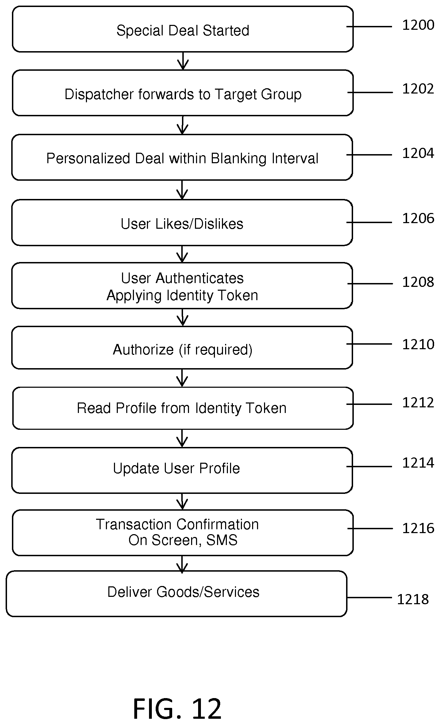

**Fig. 12** shows an example of steps which facilitate making a commercial offer to a user. A vendor initiates a bonus deal or special deal 1200. The dispatcher of the replacement content provider forwards 1202 the message to the target user groups and schedules a stream replacement at a specified time. The offer is shown 1204 within a blanking interval, for example. The user may accept or decline 1206. In case of acceptance, he or she may be requested to authenticate 1208 using a token, for example a loyalty card. An authorization step 1210 may be required. As soon as the token is connected to the media box the information written by the vendors on said token may be forwarded 1212 to the centralized identity management system at the replacement content provider's site for further processing, among others for updating 1214 the user profile. The transaction may be confirmed 1216 by the vendor using the replacement content provider as a proxy, for example. The transaction confirmation may be given in the form of an on-screen message, SMS, MMS, or a message written to an NFC tag, for example. Finally, goods may be delivered or access to a service may be granted in a concluding step 1218. In case of service deals the confirmation may also be written to the electronic token.

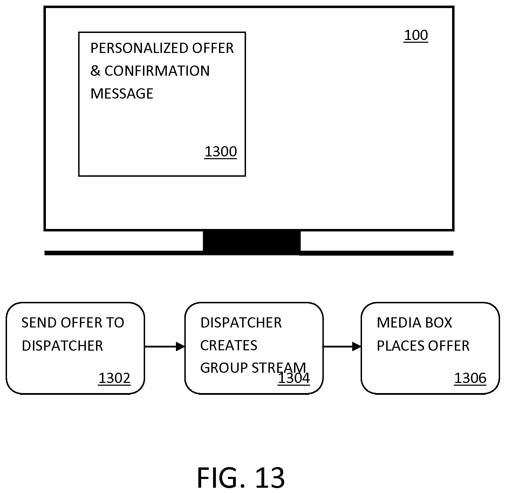

**Fig. 13** shows an example of a further use case in which the presently disclosed method may be applied. It particular, it shows how personalized offers of, for example, a local restaurant, may be displayed on a television set 100. The local restaurant may requests from the replacement content provider a placement of a personalized offer at prime time. The local restaurant may send 1302 the details of the offer to the dispatcher. Then, the dispatcher at the replacement content provider's site may create a group of target users based on selected user profile attributes, and create 1304 a corresponding group stream comprising appropriate replacement content. The group stream may be sent to the target group. The media box of the user may further personalize the offer and place 1306 a personalized offer as a displayed offer 1300 on the television set 100. In this way, a bonus deal may be provided at prime time to a specific group of users, for instance. A confirmation message 1300 of the local restaurant may also be displayed on the television set 100. More specifically, the user may accept an offer by pairing his or her token with the media box. The acceptance of the offer may be forwarded to the restaurant, using the replacement content provider as a proxy. The restaurant may in turn send a confirmation message and the required access information through the replacement content provider to the user, where the access information may be stored on the token. When the user enters the restaurant he or she may present the token containing his access information for verification.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: television set
- 102: offer
- 104: accept offer and confirm
- 106: forward confirmation
- 108: store confirmation details
- 200: plurality of vendors
- 202: claim user-specific advertisement space
- 204: plurality of users
- 300: original content provider
- 302: original media content
- 304: replacement content provider
- 306: replacement content
- 308: new content database
- 310: multiplexer control unit
- 312: output content stream
- 314: stream multiplexer
- 400: media content stream
- 402: basic media content
- 404: advertisement content
- 406: alternative content
- 408: alternative content compiler
- 410: dynamic user profile
- 600: timing analyzer
- 602: user
- 604: plurality of streams
- 700: user segment
- 702: replacement content provider segment
- 704: stream provider
- 706: network provider
- 708: television set
- 710: remote control unit
- 712: secure identity container
- 714: stream converter
- 716: stream multiplexer
- 718: user profile and alternative content manager
- 720: browser engine
- 722: local content storage unit
- 724: stream converter
- 726: multiplex-data generator
- 728: alternative content gateway
- 730: new content database
- 732: user profile database
- 800: media box
- 802: television set
- 804: token reader
- 806: remote control unit
- 900: media box
- 902: CPU/GPU/RAM/ROM/OS
- 904: secure element
- 906: cryptographic unit
- 908: secure storage unit
- 910: WLAN router
- 912: wideband modem DSL/Cable
- 914: software-defined radio tuner
- 916: stream multiplexer
- 918: interface to Flash/Hard Disk
- 920: interface to remote control
- 922: USB interface
- 924: Bluetooth/NFC interface
- 926: common interface
- 1000: user pattern detection
- 1002: secure identity container
- 1004: data link
- 1006: like/dislike
- 1008: channel data
- 1010: channel data
- 1012: remote control unit
- 1100: secure identity container
- 1102: profile preprocessor
- 1104: profiler
- 1106: user profile
- 1200: special deal started
- 1202: dispatcher forwards to target group
- 1204: personalized deal within blanking interval
- 1206: user likes/dislikes
- 1208: user authenticates using identity token
- 1210: authorize if required
- 1212: read profile from identity token
- 1214: update user profile
- 1216: transaction confirmation on screen or by SMS
- 1218: deliver goods or services
- 1300: personalized offer and confirmation message
- 1302: send offer to dispatcher
- 1304: dispatcher creates group stream
- 1306: media box personalizes and places offer

## Claims

1. A method for processing a media content stream which comprises primary media content and secondary media content, the method comprising:
- bringing an electronic token being a contactless smart card or a secure data storage within a mobile device into close proximity to a media box, such that the electronic token interacts with the media box;
- receiving the media content stream by means of the media box;
- replacing the secondary media content with replacement content in dependence on a user profile;
- combining the primary media content and the replacement content into a user output content stream,
wherein the user profile is derived at least in part from data stored in a user-owned secure identity container being a smartcard or a smart phone or from the electronic token.

2. A method as claimed in claim 1, wherein the user profile comprises user preferences.

3. A method as claimed in claim 1 or 2, wherein the user profile is derived at least in part from a user feedback on the user output content stream.

4. A method as claimed in any preceding claim, wherein the user profile is managed by a centralized identity management system.

5. A method as claimed in claim 1, wherein said data comprises at least one of a shopping pattern, a location and movement pattern, a spending pattern, a reaction on a bonus program, and a commuter pattern.

6. A method as claimed in any preceding claim, wherein the replacement content is received from a replacement content provider.

7. A method as claimed in any preceding claim, wherein combining the primary media content and the replacement content is performed using time data received from a time server.

8. A method as claimed in any preceding claim, wherein the secondary media content is received through a communication channel which is different from a communication channel through which the first media payload is received.

9. A method as claimed in any preceding claim, wherein combining the primary media content and the replacement content is performed by multiplexing said primary media content and replacement content.

10. A method as claimed in claim 9, wherein said multiplexing is performed under control of multiplex control data received from a replacement content provider.

11. A method as claimed in any preceding claim, wherein the primary media content comprises at least one of a video content, a radio content, a gaming content and an internet content.

12. A method as claimed in any preceding claim, wherein the secondary media content comprises advertisement content and the replacement content comprises alternative advertisement content.

13. A computer program product comprising instructions which, when being executed by a processing unit, carry out or control steps of a method as claimed in any preceding claim.

14. A device for processing a media content stream which comprises primary media content and secondary media content, the device comprising:
- a media box configured to receive the media content stream, and
- a token reader,
wherein the device is arranged to process the media content stream by performing the method according to one of the claims 1 to 12.

## Patentansprüche

1. Ein Verfahren zum Verarbeiten eines Medieninhalt Stroms, aufweisend einen primären Medieninhalt und einen sekundären Medieninhalt, wobei das Verfahren aufweist:
Bringen eines elektronisches Token, welches eine kontaktlose Smartkarte oder ein sicherer Datenspeicher innerhalb einer mobilen Vorrichtung ist, in große Nähe zu einer Medienbox, so dass das elektronische Token mit der Medienbox interagiert;
Empfangen des Medieninhalt Stroms durch Mittel der Medienbox;
Ersetzen des sekundären Medieninhalts mit einem Ersatzinhalt in Abhängigkeit von einem Verwender Profil;
Kombinieren des primären Medieninhalts und des Ersatzinhalts in einem Verwender Ausgabeinhalt Strom,
wobei das Verwender Profil abgeleitet ist wenigstens teilweise von Daten, die in einem vom Verwender besessenen sichere Identität Container gespeichert sind, der eine Smartkarte oder ein Smartphone ist oder von dem elektronischen Token.

2. Ein Verfahren gemäß Anspruch 1, wobei das Verwender Profil Verwender Preferenzen aufweist.

3. Ein Verfahren gemäß Anspruch 1 oder Anspruch 2, wobei das Verwender Profil abgeleitet ist zumindest teilweise von einem Verwender Feedback über den Verwender Ausgabeinhalt Stroms.

4. Ein Verfahren gemäß einem der vorhergehenden Ansprüche, wobei das Verwender Profil verwaltet wird mittels eines zentralisierten Identität Managementsystems.

5. Ein Verfahren gemäß Anspruch 1, wobei die Daten aufweisen wenigstens einen von einem Kaufmuster, einem Ort und Bewegungsmuster, einem Ausgabemuster, einer Reaktion auf ein Bonusprogramm, und einem Pendlermuster.

6. Ein Verfahren gemäß einem der vorhergehenden Ansprüche, wobei der Ersatzinhalt empfangen wird von einem Ersatzinhalt Bereitsteller.

7. Ein Verfahren gemäß einem der vorhergehenden Ansprüche, wobei Kombinieren des primären Medieninhaltes und des Ersatzinhaltes durchgeführt wird unter Verwendung von Zeitdaten empfangen von einem Zeitserver.

8. Ein Verfahren gemäß einem der vorhergehenden Ansprüche, wobei der sekundäre Medieninhalt empfangen wird durch einen Kommunikationskanal, der unterschiedlich ist von einem Kommunikationskanal durch welchem der primäre Medien Payload empfangen wird.

9. Ein Verfahren gemäß einem der vorhergehenden Ansprüche, wobei Kombinieren des primären Medieninhaltes und des Ersatzinhaltes durchgeführt wird mittels Multiplexen des primären Medieninhaltes und des Ersatzinhaltes.

10. Ein Verfahren gemäß Anspruch 9, wobei das Multiplexen durchgeführt wird unter Kontrolle von Multiplex Steuerdaten, empfangen von einem Ersatzinhalt Bereitsteller.

11. Ein Verfahren gemäß einem der vorhergehenden Ansprüche, wobei der primäre Medieninhalt aufweist wenigstens einen von einem Videoinhalt, einem Rundfunkinhalt, einen Spielinhalt und einen Internetinhalt.

12. Ein Verfahren gemäß einem der vorhergehenden Ansprüche, wobei der sekundäre Medieninhalt aufweist einen Werbeinhalt und der Ersatzinhalt aufweist einen alternativen Werbeinhalt.

13. Ein Computerprogramm Produkt aufweisend Instruktionen, welche, wenn diese ausgeführt werden mittels einer Verarbeitungseinheit, Schritte einer Methode gemäß einem der vorhergehenden Ansprüche ausführen oder steuern.

14. Eine Vorrichtung zum Verarbeiten eines Medieninhalt Stroms, aufweisend einen primären Medieninhalt und einen sekundären Medieninhalt, wobei die Vorrichtung aufweist:
eine Medienbox, die konfiguriert ist, zu empfangen den Medieninhalt Strom, und
einen Token Leser,
wobei die Vorrichtung ausgebildet ist, zu verarbeiten den Medieninhalt Strom mittels Durchführens des Verfahrens gemäß einem der Ansprüche 1 bis 12.

## Revendications

1. Procédé de traitement d'un flux de contenu de média qui comporte un contenu primaire de média et contenu secondaire de média, le procédé comportant:
- amener un jeton électronique qui est une carte à puce sans contact ou un stockage de données sécurisé à l'intérieur d'un dispositif mobile à proximité immédiate d'un boîtier de média, de telle façon que le jeton électronique interagisse avec le boîtier de média ;
- recevoir le flux de contenu de média au moyen de le boîtier de média ;
- remplacer le contenu secondaire de média par un contenu de remplacement en fonction d'un profil d'utilisateur ;
- combiner le contenu primaire de média et le contenu de remplacement en un flux de contenu de sortie d'utilisateur, le profil d'utilisateur étant tiré au moins en partie de données stockées dans un conteneur d'identité sécurisé détenu par l'utilisateur, qui est une carte à puce ou un ordiphone ou du jeton électronique.

2. Procédé selon la revendication 1, le profil d'utilisateur comportant des préférences d'utilisateur.

3. Procédé selon la revendication 1 ou 2, le profil d'utilisateur étant tiré au moins en partie d'une réaction d'utilisateur sur le flux de contenu de sortie d'utilisateur.

4. Procédé selon l'une quelconque des revendications précédentes, le profil d'utilisateur étant géré par un système de gestion centralisée d'identités.

5. Procédé selon la revendication 1, lesdites données comportant au moins une donnée parmi un schéma d'achats, un schéma de position et de mouvement, un schéma de dépenses, une réaction sur un programme de gratifications, et un schéma de navetteur.

6. Procédé selon l'une quelconque des revendications précédentes, le contenu de remplacement étant reçu en provenance d'un pourvoyeur de contenu de remplacement.

7. Procédé selon l'une quelconque des revendications précédentes, la combinaison du contenu primaire de média et du contenu de remplacement étant effectuée en utilisant des données temporelles reçues en provenance d'un serveur de temps.

8. Procédé selon l'une quelconque des revendications précédentes, le contenu secondaire de média étant reçu par l'intermédiaire d'un canal de communication qui est différent d'un canal de communication par l'intermédiaire duquel la première charge utile de média est reçue.

9. Procédé selon l'une quelconque des revendications précédentes, la combinaison du contenu primaire de média et du contenu de remplacement étant effectuée en multiplexant ledit contenu primaire de média et ledit contenu de remplacement.

10. Procédé selon la revendication 9, ledit multiplexage étant effectué sous le contrôle de données de commande de multiplexage reçues en provenance d'un pourvoyeur de contenu de remplacement.

11. Procédé selon l'une quelconque des revendications précédentes, le contenu primaire de média comportant au moins un contenu parmi un contenu vidéo, un contenu radio, un contenu de jeu et un contenu Internet.

12. Procédé selon l'une quelconque des revendications précédentes, le contenu secondaire de média comportant un contenu publicitaire et le contenu de remplacement comportant un contenu publicitaire de substitution.

13. Produit de programme d'ordinateur comportant des instructions qui, lorsqu'elles sont exécutées par une unité de traitement, réalisent ou commandent des étapes d'un procédé selon l'une quelconque des revendications précédentes.

14. Dispositif de traitement d'un flux de contenu de média qui comporte un contenu primaire de média et un contenu secondaire de média, le dispositif comportant :
- un boîtier de média configuré pour recevoir le flux de contenu de média, et
- un lecteur de jetons, le dispositif étant agencé pour traiter le flux de contenu de média en réalisant le procédé selon l'une des revendications 1 à 12.
